# EUROPÄISCHE PATENTANMELDUNG

(11) **EP 1 739 476 A1**
(43) Veröffentlichungstag der Anmeldung: **03.01.2007**
(21) Anmeldenummer: 05014323.9
(22) Anmeldetag: 01.07.2005
(51) Int. Cl.: G02F 1/157, B60R 1/08

(54) **Elektrochromes Element**

(71) Anmelder: Flabeg GmbH & Co. KG, 90766 Fürth (DE)
(72) Erfinder: Appelfeller, Klaus, 98744 Oberweissbach (DE); Hönig, Thomas, 93426 Roding (DE); Jungbauer, Franz, 93437 Furth im Wald (DE); Zilker, Christian, 93449 Waldmünchen (DE)
(74) Vertreter: Tergau & Pohl Patentanwälte

(57) **Zusammenfassung**

Ein elektrochromes Element (1) mit einem transparenten Träger (2), auf den ein Mehrschichtsystem aufgebracht ist, wobei das Mehrschichtsystem eine lonenspeicherschicht (8), eine transparente Festkörperelektrolytschicht (10), eine elektrochrome Elektrodenschicht (6) und eine Reflektorschicht (12) umfasst, soII einen besonders hohen Reflexionshub ermöglichen und damit insbesondere für den Einsatz als blendarmer Kfz-Rückblickspiegel besonders geeignet ausgestaltet sein. Dabei weist erfindungsgemäß die Reflektorschicht (12) sine für den Durchtritt von Wasser oder Wasserdampf ausreichende Porosität auf.

## Beschreibung

Die Erfindung bezieht sich auf ein elektrochromes Element mit einem transparenten Träger, auf den ein Mehrschichtsystem aufgebracht ist, wobei das Mehrschichtsystem eine lonenspeicherschicht, eine transparente Festkörperelektrolytschicht, eine elektrochrome Elektrodenschicht und eine Reflektorschicht umfasst. Sie betrifft weiter einen Kraftfahrzeugspiegel mit einem derartigen elektrochromen Element sowie ein Verfahren zur Herstellung eines derartigen elektrochromen Elements.

Das Phänomen einer elektrochemisch induzierten spektroskopischen Änderung in einem Material, üblicherweise einer Farbänderung, wird üblicherweise als Elektrochromie bezeichnet. Unter Ausnutzung dieses Phänomens können beispielsweise optische Vorrichtungen mit variabler Transmission oder Reflexion hergestellt werden, bei denen sich der Reflexionsgrad oder Transmissionsgrad in Abhängigkeit von einer angelegten elektrischen Spannung verändern lässt.

Bei derartigen elektrochromen Elementen wechselwirkt ein elektrochromes Material mit Gastionen oder Elektronen, die durch Anlegen eines elektrischen Potentials in das elektrochrome Material eingebracht werden, wobei dessen Wechselwirkung mit einfallender elektromagnetischer Strahlung beeinflußt wird. Typische Beispiele für derartige elektrochrome Materialien sind WO₃ und MoO₃, die in dünnen Schichten auf einen Träger aufgebracht nahezu farblos sind. Wandern in einer derartigen Schicht Protonen ein, so erfolgt beispielsweise im Falle von Wolframoxid (WO₃) eine Reduktion zu blauer Wolfram-Bronze, wobei die Intensität der Färbung durch die in der Schicht geflossene Ladungsmenge bestimmt wird.

Auf der Grundlage dieses Prinzips der Elektrochromie hergestellte elektrochrome Elemente können in verschiedenartigen Vorrichtungen zum Einsatz kommen, bei denen eine gezielte Variabilität der Reflexions- oder Transmissionseigenschaften wünschenswert ist. Beispielsweise können derartige Vorrichtungen in Fenstern und Sonnendächern, insbesondere für Kraftfahrzeuge, zur Anwendung kommen. Besonders vorteilhaft sind derartige Anwendungen aber bei der Herstellung blendarmer Kraftfahrzeug-Rückblickspiegel. Ein Problem bei derartigen Rückspiegeln, die im Hinblick auf gute Erkennbarkeit bei Tageslicht üblicherweise auf einen besonders hohen Reflexionsgrad hin ausgelegt sind, besteht nämlich darin, dass sie bei Nacht insbesondere im Hinblick auf mögliche Blendung durch nachfolgende Kraftfahrzeuge sehr störend sein können. Im Hinblick auf die spektrale Verteilung des von den Scheinwerfern von Kraftfahrzeugen emittierten Lichts kann daher auf besonders günstige Weise durch geeignete Variation der Reflexionseigenschaften eines Rückblickspiegels ein wirksames Abblendverhalten erreicht werden, indem ein derartiger Spiegel mit geeignet gewähltem elektrochromem Material beschichtet ist. Dabei kann einerseits bei Tageslicht ein besonders hoher Reflexionsgrad eingehalten werden, wobei im Bedarfsfall, also beispielsweise nach sensorisch detektiertem Lichteinfall bei Nacht, gezielt durch Anlegen einer Steuerspannung die spektralen Reflexionseigenschaften modifiziert und somit eine Abblendwirkung erzielt werden kann.

Gerade im Hinblick auf eine mögliche Verwendung in Kraftfahrzeug-Rückblickspiegeln ist es für derartige elektrochrome Elemente wünschenswert, bei vergleichsweise kurzen Schaltzeiten einen besonders hohen sogenannten Reflexionshub, nämlich die Differenz zwischen dem Reflexionsmaximum und dem Reflexionsminimum, zu erreichen. Damit ist die durch Anlegen der Steuerspannung erreichbare Verringerung der Blendwirkung besonders hoch. Des weiteren sollten für die Anwendung in Kraftfahrzeug-Rückblickspiegeln geeignete elektrochrome Elemente generell besonders langlebig im Hinblick auf die globale Einsatzdauer und die Anzahl der Schaltzyklen ausgelegt sein.

Diese Erfordernisse werden in besonders hohem Maße durch ein elektrochromes Element in sogenannter Festkörperbauweise erfüllt, wie es beispielsweise aus der DE 196 40 515 A1 bekannt ist. Bei diesem elektrochromen Element ist auf einem transparten Träger, beispielsweise auf einem Glassubstrat, ein Mehrschichtsystem aufgebracht. Das Mehrschichtsystem umfasst dabei eine unmittelbar auf dem Substrat aufgebrachte lonenspeicherschicht, auf der eine transparente Festkörperelektrolytschicht aufgebracht ist. Auf diese ist wiederum eine elektrochrome Elektrodenschicht aufgebracht, die von einer Reflektorschicht überdeckt ist. Durch diese Bauweise ist insbesondere eine hohe Zuverlässigkeit und Laufzeitstabilität erreichbar, wie sie gerade für Anwendungen im Kfz-Bereich erforderlich ist. Um dabei auch eine ausgeprägte Abblendwirkung sicherzustellen, ist gerade für elektrochrome Elemente dieses Typs ein hoher Reflexionshub wünschenswert.

Der Erfindung liegt daher die Aufgabe zugrunde, ein elektrochromes Element der oben genannten Art anzugeben, mit dem ein besonders großer Reflektionshub erreichbar ist. Des weiteren soll ein Verfahren zum Herstellen eines derartigen elektrochromen Elements angegeben werden.

Bezüglich des elektrochromen Elements wird die genannte Aufgabe erfindungsgemäß dadurch gelöst, dass die Reflektorschicht eine für den Durchtritt von Wasser oder Wasserdampf ausreichende Porosität aufweist.

Bei dem bekannten elektrochromen Element wird, wie generell üblicherweise bei in Dünnschichttechnologie hergestellten Mehrschichtsystemen, eine besonders hohe Homogenität und Reinheit der einzelnen Schichten angestrebt, insbesondere um unter reproduzierbaren Herstellungsbedingungen eine besonders lange Lebensdauer zu garantieren. Wie sich aber in überraschender Weise herausgestellt hat, sind für das elektrochrome Element deutlich verbesserte Arbeitsparameter, insbesondere günstigere Einsatzzeiten und ein deutlich verstärkter Reflexionshub, erreichbar, indem die auf der elektrochromen Elektrodenschicht angeordnete Reflektorschicht mit vermeintlich eigentlich verschlechterten Schichtparametern hergestellt wird. Unter Inkaufnahme eines geringfügig verschlechterten Gesamtreflexionsgrades bewirkt die gezielte Einstellung einer gewissen Porosität in der Reflektorschicht, dass sich der erreichbare Reflexionshub im Vergleich zu möglichst dichten Schichten erheblich vergrößert. Durch die Einstellung einer Porosität, die den nahezu ungehinderten Durchtritt von Wasser oder Wasserdampf durch die Reflektorschicht ermöglicht, ist nämlich gewährleistet, dass das unter der Reflektorschicht liegende Schichtsystem vergleichsweise einfach und zuverlässig großflächig mit dem für den Ablauf der elektrochromen Prozesse erforderlichen Arbeitsmedium, nämlich Wasser, versorgt werden kann. Darüber hinaus ermöglicht die Abscheidung einer vergleichsweise porös gehaltenen Reflektorschicht die Schichtherstellung unter für die darunterliegenden Schichten vergleichsweise schonenden Herstellungsbedingungen, durch die eine Qualitätsminderung der bereits abgeschiedenen Schichten, insbesondere der elektrochromen Elektrodenschicht, vermieden oder zumindest verringert werden kann.

Wie sich herausgestellt hat, weist die Reflektorschicht zur Erzielung besonders günstiger Betriebsparameter vorteilhafterweise eine Porosität von mindestens 10 %, vorzugsweise von mindestens 20 %, und/oder vorteilhafterweise eine Porosität von höchstens 50 %, vorzugsweise von höchstens 35 %, auf. Die Porosität wird dabei gemäß dem sogenannten Bruggemann-Modell durch den Volumenanteil der nicht mit dem Material der Reflektorschicht angefüllten Poren oder Zwischenräume angegeben. Unter einer Porosität von 30 % in diesem Sinne ist somit ein Volumenanteilsverhältnis Material der Reflektorschicht/Luft von 70/30 zu verstehen.

Grundsätzlich kann die Reflektorschicht unter Verwendung gängiger Materialien wie beispielsweise Silber, Chrom oder dergleichen hergestellt sein. Wie sich herausgestellt hat, sind jedoch besonders günstige Ergebnisse erreichbar, indem vorteilhafterweise die Reflektorschicht aus Aluminium (Al) gebildet ist. Vorteilhafterweise ist die Reflektorschicht dabei aus Kristalliten einer mittleren Größe von etwa 30 nm gebildet. Vorteilhafterweise weist die Reflektorschicht eine Schichtdicke von 50 bis 200 nm, vorzugsweise von 60 bis 100 nm, besonders vorteilhafterweise von etwa 80 nm auf. Vorteilhafterweise ist die Reflektorschicht dabei derart ausgestaltet, dass beim Schalten kein wesentlicher Spannungsabfall an der dadurch gegebenen Elektrode auftritt. Dazu beträgt der Flächenwiderstand der Reflektorschicht vorzugsweise weniger als etwa 1 Ω.

Die elektrochrome Elektrodenschicht ist vorteilhafterweise aus einem geeignet gewählten elektrochromen Material vorzugsweise aus Molybdänoxid, Titanoxid, Vanadiumoxid, Nioboxid, Chromoxid, Manganoxid, Eisenoxid, Cobaltoxid, Nikkeloxid, Rhodiumoxid, Tantaloxid, Iridiumoxid und/oder in besonders vorteilhafter Ausgestaltung aus Wolframoxid gebildet. Insbesondere liegen diese Materialien dabei vorzugsweise als stöchiometrische oder nahezu stöchiometrische Verbindungen gemäß MoO₃, TiO₂, V₂O₅, Nb₂O₅, Cr₂O₃, MnO₂, FeO₂, CoO₂, NiO₂, RhO₂, Ta₂O₅, IrO₂, WO₃ vor. Besonders günstige Arbeitsparameter sind erreichbar, indem die elektrochrome Elektrodenschicht vorzugsweise eine Schichtdicke von etwa 270 nm für WO₃ aufweist.

Die Festkörperelektrolytschicht ist vorteilhafterweise aus Zirkonoxid, Siliziumoxid, Aluminiumoxid, Selenoxid und/oder vorzugsweise aus Tantaloxid gebildet. Für die Festkörperelektrolytschicht ist vorteilhafterweise eine Schichtdicke von etwa 200 nm gewählt. Diese Materialien liegen vorzugsweise ebenfalls stöchiometrisch oder nahezu stöchiometrisch vor als ZrO₂, SiO₂, Al₂O₃, SnO₂ bzw. Ta₂O₅. Zur weiteren Verstärkung des erreichbaren Reflexionshubes ist die lonenspeicherschicht in besonders vorteilhafter Ausgestaltung ihrerseits als elektrochrome Elektrode ausgebildet, die bei Anlegen der Steuerspannung ebenfalls eine Veränderung ihrer Transmissionseigenschaften erfährt. Zur Bildung der elektrochromen Gegenelektrode ist dabei vorzugsweise als Material für die Herstellung der lonenspeicherschicht Iridiumoxid, Iridium-Magnesiumoxid, Nickeloxid, Nickel-Magnesiumoxid, Manganoxid, Cobaltoxid, Titan-Vanadiumoxid und/oder vorzugsweise aus Iridium-Tantaloxid gewählt, wobei die lonenspeicherschicht vorteilhafterweise eine Schichtdicke von etwa 100 nm aufweist.

Zweckmäßigerweise arbeitet das elektrochrome Element mit Wasser als Arbeitsmedium. Durch Anlegen einer Steuerspannung über die Festkörperelektrolytschicht, die dabei ausreichend mit Wasser als Arbeitsmedium beladen ist, unter Nutzung der elektrochromen Elektrodenschicht als Kathode und der lonenspeicherschicht als Anode erfolgt dabei eine zumindest teilweise elektrolytische Zersetzung des in der Festkörperelektrolytschicht und/oder den angrenzenden Schichten enthaltenen Wassers in Protonen einerseits und Hydroxidionen andererseits. Durch die Einlagerung der dabei erzeugten Protonen als Gastionen in die elektrochrome Elektrodenschicht erfährt diese wie vorstehend beschrieben eine Änderung ihres spektralen Transmissionsvermögens. Durch Einlagerung der Hydroxidionen in die als elektrochrome Gegenelektrode ausgebildete lonenspeicherschicht erfährt diese darüber hinaus ebenfalls eine Änderung ihrer spektralen Transmissionseigenschaften, wobei sich beide genannten Einfärbungseffekte gegenseitig verstärken und so einen besonders hohen Reflexionshub bewirken. Bei einer Abkopplung der Steuerspannung und einer Verbindung der Elektroden über einen äußeren Widerstand oder einen Kurzschluss oder auch bei einer Erniedrigung oder Umpolung der Steuerspannung rekombinieren hingegen die eingelagerten Hydroxidionen mit den Protonen unter Bildung von Wasser, so dass die Änderung der Transmissionsgrade wieder aufgehoben wird.

Bei der vorgesehenen Schichtfolge und bei ausreichender Beladung der Wirkschichten mit Wasser als Arbeitsmedium ist dieser Prozeß somit reversibel, ohne dass eine Nachspeisung von Arbeitsmedium oder ein Stoffaustausch mit der Umgebung erforderlich wäre. Das elektrochrome Element eignet sich demzufolge besonders für eine sogenannte gekapselte Ausführung, bei der das Mehrschichtsystem zum Schutz vor ungewollten Fremdeinwirkungen vollständig und weitgehend von einer Ummantelung umgeben ist. Zur Bereitstellung eines derartigen gekapselten Systems, das insbesondere für besondere langlebige Ausführungen geeignet ist, ist das Mehrschichtsystem vorteilhafterweise mit einer Versiegelung versehen, die beispielsweise in Form einer weiteren Beschichtung, beispielsweise einer Lackschicht, aufgebracht sein kann. Alternativ oder zusätzlich kann zur Versiegelung auch eine Harzschicht oder dergleichen, gegebenenfalls unter Verwendung eines geeigneten Klebers zur Anbringung auf der Reflektorschicht, vorgesehen sein. Weiterhin kann alternativ oder zusätzlich zur Abdeckung der Reflektorschicht auch ein weiteres Substrat, beispielsweise ein Glas, vorgesehen sein.

Eine zuverlässige Einbringung des als Arbeitsmedium vorgesehenen Wassers in das Schichtsystem ist erreichbar, in dem vorteilhafterweise die elektrochrome Elektrodenschicht auf der vom Träger abgewandten Seite der Festkörperelektrolytschicht aufgebracht und ihrerseits von der Reflektorschicht überdeckt ist. Damit ergibt sich somit grundsätzlich für das elektrochrome Element die Schichtfolge Träger- lonenspeicherschicht- transparente Festkörperelektrolytschicht- elektrochrome Elektrodenschicht- Reflektorschicht. Zur Homogenisierung des elektrischen Kontakts zur lonenspeicherschicht ist dieser in weiterer oder alternativer vorteilhafter Ausgestaltung eine weitere Elektrodenschicht, vorzugsweise gebildet aus Indium-Zinnoxid (ITO) oder Sb-dotiertem Zinnoxid (SnO₂ : Sb) oder Al-dotiertem Zinkoxid (ZnO : Al), unmittelbar benachbart. Diese Schicht kann insbesondere zwischen Träger und lonenspeicherschicht angeordnet sein. Die Dotierungen, sofern vorgesehen, sind dabei vorzugsweise zu einem Anteil von bis zu 5 % enthalten.

Vorteilhafterweise wird das elektrochrome Element in einem Kraftfahrzeugspiegel eingesetzt.

Bezüglich des Verfahrens zur Herstellung des elektrochromen Elements wird die genannte Aufgabe gelöst, indem die das Mehrschichtsystem bildenden Schichten sequentiell in geeignet gewählter Reihenfolge durch ein Vakuum- Beschichtungsverfahren auf den transparenten Träger aufgebracht werden. Vorteilhafterweise wird als Beschichtungsverfahren dabei eine Elektronenstrahlbedampfung (ESB) oder die Kathodenzerstäubung (Sputtern) vorgenommen.

Zur Gewährleistung der vorgesehenen Porosität bei der hergestellten Reflektorschicht werden dabei vorteilhafterweise die Betriebsparameter des gewählten Beschichtungsverfahrens geeignet gewählt. Bei der Abscheidung der Reflektorschicht durch Elektronenstrahlbedampfung wird vorteilhafterweise eine Abscheidung mit vergleichsweise geringer Beschichtungsrate von etwa 6-9 nm pro Minute vorgenommen. Bei der Abscheidung der Reflektorschicht durch Kathodenzerstäubung wird diese vorteilhafterweise in Inertgasatmosphäre bei einem Systemdruck von etwa 0,01 bis 0,02 mbar vorgenommen.

Um besonders günstige Schichteigenschaften insbesondere bezüglich der elektrochromen Elektrodenschicht zu gewährleisten, wird vorteilhafterweise die Reflektorschicht unmittelbar und ohne zwischenzeitliches Belüften nach dem Aufbringen der elektrochromen Elektrodenschicht aufgebracht.

Gerade im Hinblick auf die vorgesehene Porosität der Reflektorschicht kann die Beladung der aktiven Schichten des Mehrschichtsystems mit dem als Arbeitsmedium vorgesehenen Wasser vergleichsweise problemlos bei bereits aufgebrachter Reflektorschicht erfolgen, wobei insbesondere das hergestellte Mehrschichtsystem über eine ausreichend lange Behandlungszeit von beispielsweise vier Stunden hinweg in einer Atmosphäre ausreichender Feuchte (beispielsweise 40 % relativer Feuchte) gelagert wird. Anschließend wird vorteilhafterweise eine Versiegelung aufgebracht, so dass das elektrochrome Element als gekapseltes System weiter verwendet werden kann.

Die mit der Erfindung erzielten Vorteile bestehen insbesondere darin, dass durch das Aufbringen einer ausreichend porös gehaltenen Reflektorschicht auf die elektrochrome Elektrodenschicht einerseits besonders gute Materialeigenschaften der elektrochromen Elektrodenschicht ― insbesondere ohne nennenswerte Vergiftungserscheinungen ― erhalten werden können, wobei andererseits auch bei bereits aufgebrachter Reflektorschicht eine vergleichsweise einfache und zuverlässige großflächige Einlagerung des als Arbeitsmedium vorgesehenen Wassers in das Mehrschichtsystem vorgenommen werden kann. Das elektrochrome Element ist somit besonders zur Ausführung in sogenannter gekapselter Bauweise geeignet, bei der durch eine Versiegelung und/oder Ummantelung des Mehrschichtssystems ein besonders guter Schutz gegenüber unerwünschten Fremdeinwirkungen oder Beschädigungen des Systems erreichbar ist. Der mit dem elektrochromen Element erreichbare Reflexionshub, also die aufgrund der elektrochromen Phänomene durch Anlegen der Steuerspannung erreichbare Änderung des Reflexionsgrads eines mit einem derartigen elektrochromen Element versehenen Spiegels, kann dabei um das 5-fache oder mehr über vergleichbaren Systemen mit dichter Reflektorschicht liegen.

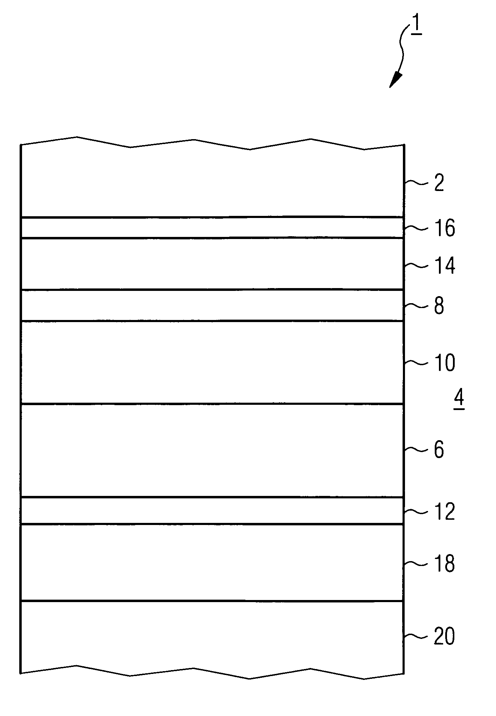

Ein Ausführungsbeispiel der Erfindung wird anhand einer Zeichnung näher erläutert. Darin zeigt die Figur ausschnittweise ein elektrochromes Element im Querschnitt.

Das elektrochrome Element 1 gemäß der Figur ist besonders für eine Anwendung in einem Rückblickspiegel eines Kraftfahrzeugs vorgesehen, wobei auch noch andere geeignete Verwendungen wie beispielsweise bei schaltbaren Fenstern, Sonnendächern oder dergleichen möglich sind. Das elektrochrome Element 1 ist in sogenannter Festkörper-Bauweise ausgeführt und umfasst ein auf einem transparenten Träger 2 aufgebrachtes Mehrschichtsystem 4. Als transparenter Träger 2 ist im Ausführungsbeispiel ein Substrat aus Glas vorgesehen.

Als wesentlichen Funktionsbestandteil zur Nutzung des Phänomens der Elektrochromie zur gezielten Variation seiner optischen Eigenschaften umfasst das Mehrschichtsystem 4 eine elektrochrome Elektrodenschicht 6, die aus geeignet gewähltem elektrochromen Material, im Ausführungsbeispiel Wolframoxid (WO₃), gebildet ist. Alternativ könnte die Elektrodenschicht 6 auch aus anderem geeigneten elektrochromen Material gebildet sein, das beim Anlegen einer Steuerspannung einer optischen Transmissionseigenschaften ändert. Der elektrochromen Elektrodenschicht 6 ist als Gegenelektrode eine lonenspeicherschicht 8 zugeordnet, die ebenfalls aus elektrochromem Material, im Ausführungsbeispiel Iridium-Tantaloxid in volloxidischer oder leicht suboxidischer Form, wobei die Massenanteile (Ir : Ta) zum Beispiel annähernd 30 : 70 entsprechen können, gebildet ist. Alternativ könnte für eine Ausgestaltung der lonenspeicherschicht 8 als elektrochrome Gegenelektrode auch ein anderes geeignetes elektrochromes Material wie beispielsweise IrO₂, NiO₂, MnO₂, CoO₂, Iridium-Magnesium-Oxid, Nickel-Magnesium-Oxid und/oder Titan-Vanadium-Oxid, letzere jeweils in volloxidischer oder leicht suboxidischer Form mit den Massenanteilen Ir : Mg von zum Beispiel 30 : 70, Ni : Mg von zum Beispiel 50 : 50 bzw. Ti : Va von zum Beispiel 40 : 60, vorgesehen sein. Die elektrochrome Elektrodenschicht 6 und die lonenspeicherschicht 8 umfassen eine zwischen ihnen angeordnete transparente Festkörperelektrolytschicht 10, die im Ausführungsbeispiel aus Tantaloxid (Ta₂O₅) gebildet ist. Alternativ könnte die Festkörperelektrolytschicht 10 auch aus einem anderen geeigneten Material wie beispielsweise ZrO₂, SiO₂, Al₂O₃, oder SnO₂ gebildet sein.

Auf ihrer von der lonenspeicherschicht 8 abgewandten Seite ist die elektrochrome Elektrodenschicht 6 von einer Reflektorschicht 12 abgedeckt. Auf ihre von der elektrochromen Elektrodenschicht 6 abgewandten Seite ist die lonenspeicherschicht 8 über eine weitere Elektrodenschicht 14 aus Indium-Zinnoxid (ITO) und eine Zwischenschicht 16 aus SiON mit dem Träger 2 verbunden.

Das elektrochrome Element 1 weist damit die Schichtfolge Träger 2 ― Zwischenschicht 16 ― Elektrodenschicht 14 ― lonenspeicherschicht 8 ― Festkörperelektrolytschicht 10 ― elektrochrome Elektrodenschicht 6 ― Reflektorschicht 12 auf. Als Schichtdicke sind dabei im Ausführungsbeispiel gewählt: für die Zwischenschicht 16 etwa 50 nm, für die weitere Elektrodenschicht 14 etwa 200 nm, für die elektrochrome Elektrodenschicht 6 etwa 270 nm und für die poröse Reflektorschicht 12 etwa 80 nm.

Das elektrochrome Element 1 ist zum Einsatz als blendarmer Spiegel vorgesehen, dessen Reflexionseigenschaften bedarfsweise korrigiert werden können. Durch die Schichtfolge im Mehrschichtsystem 4 ist dabei gewährleistet, dass ein zu reflektierender Lichtstrahl zunächst durch den Träger 2 und sodann durch die Zwischenschicht 16, die weitere Elektrodenschicht 14, die lonenspeicherschicht 8, die Festkörperelektrolytschicht 10 und durch die elektrochrome Elektrodenschicht 6 hindurch tritt, bevor er an der Reflektorschicht 12 reflektiert wird. Der reflektierte Lichtstrahl durchtritt sodann die genannten Schichten im umgekehrter Reihenfolge, bevor er das elektrochrome Element 1 durch den Träger 2 wieder verlässt. Im ungeschalteten Zustand ist das Mehrschichtsystem 4 dabei vergleichsweise hoch transmissiv ausgelegt, so dass insgesamt vergleichsweise hohe Reflexionsgrade von beispielsweise etwa 70 % erreichbar sind.

Im Bedarfsfall, also wenn eine Blendung beispielsweise des Fahrers durch nachfolgende Fahrzeuge vermieden werden soll, kann der Reflexionsgrad des elektrochromen Elements 1 aber durch Anlegen einer Ansteuerspannung zwischen die elektrochrome Elektrodenschicht 6 und die lonenspeicherschicht 8 vermindert werden. Dazu wird die elektrochrome Elektrodenschicht 6 als Kathode und die lonenspeicherschicht 8 als Anode geschaltet. Durch die dabei anliegende Spannung wird in der elektrochromen Elektrodenschicht 6, in der Festkörperelektrolytschicht 10 und/oder in der lonenspeicherschicht 8 befindliches, als Arbeitsmedium vorgesehenes Wasser in Protonen und Hydroxidionen dissoziiert, wobei sich die Protonen in der elektrochromen Elektrodenschicht 6 und die Hydroxidionen in der lonenspeicherschicht 8 anreichern. Durch diese Einlagerung der jeweiligen lonen erfolgt eine Eintrübung und gegebenenfalls Verfärbung in der elektrochromen Elektrodenschicht 6 und in der lonenspeicherschicht 8, so dass sich der Reflexionsgrad des elektrochromen Elements 1 vermindert. Bei Abkopplung der Ansteuerspannung rekombinieren die Protonen und die Hydroxidionen wieder zu Wasser, so dass sich der ursprüngliche Zustand und damit auch der ursprüngliche Reflexionsgrad des elektrochromen Elements 1 wieder einstellt.

Das elektrochrome Element 1 ist für einen besonders hohen sogenannten Reflexionshub, also eine besonders hohe Änderung des Reflexionsgrads in Abhängigkeit von der angelegten Ansteuerspannung, ausgelegt. Um dies zu erreichen, ist die Reflektorschicht 12 porös ausgeführt und weist ein für einen Durchtritt von Wasser oder Wasserdampf ausreichende Porosität auf. Im Ausführungsbeispiel ist die Reflektorschicht 12 dabei aus Aluminium (AI) gebildet, das eine Porosität von etwa 30 % aufweist. Die Reflektorschicht 12 ist dabei aus Kristalliten einer mittleren Größe von etwa 30 nm gebildet.

Das Mehrfachschichtsystem 4 ist in Dünnschichttechnologie durch Vakuum- Beschichtungsverfahren auf den Träger 2 aufgebracht. Als besonders geeignetes Herstellungsverfahren kommen dabei die Elektronenstrahlbedampfung oder auch die Kathodenzerstäubung in Betracht. In dem Ausführungsbeispiel ist das Mehrschichtsystem 4 dabei durch Kathodenzerstäubung aufgebracht.

Bei der Herstellung des Elektrodenelements 1 werden dabei zunächst in geeigneter Reihenfolge die Zwischenschicht 16, die weitere Elektrodenschicht 14, die lonenspeicherschicht 8, die Festkörperelektrolytschicht 10 und die elektrochrome Elektrodenschicht 6 aufgebracht. Die Aufbringung dieser Schichten erfolgt dabei sequentiell und unter der Wahl geeigneter Betriebsparameter für die Kathoderzerstäubungsanlage. Die genannten Schichten können dabei zeitlich unmittelbar nacheinander oder auch unter zwischenzeitlicher Lagerung in trockener Atmosphäre (relative Feuchte 10 %) erfolgen.

Nach dem Aufbringen der elektrochromen Elektrodenschicht 6 erfolgt unmittelbar, also ohne zwischenzeitliches Belüften der Depositionsanlage, die Auftragung der Reflektorschicht 12 durch Kathodenzerstäubung. Zur Gewährleistung der vorgesehenen Porosität der entstehenden Reflektorschicht 12 wird dabei die Abscheidung dieser Schicht in Inertgasatmosphäre bei einem Systemdruck von etwa 0,01 bis 0,02 mbar vorgenommen.

Aufgrund der gewählten Beschichtungsparameter beeinträchtigt das Aufbringen der Reflektorschicht 12 die Qualität der darunterliegenden elektrochromen Elektrodenschicht 6 nur unwesentlich. Zu dem kann aufgrund der gewählten Porosität der Reflektorschicht 12 nach deren Aufbringung auf besonders einfache Weise eine zuverlässige und großflächige Beaufschlagung des Mehrfachschichtsystems 4 mit dem als Arbeitsmedium vorgesehenen Wasser vorgenommen werden. Dazu wird der beschichtete Träger 2 für eine vorgegebene Lagerzeit von etwa vier Stunden in feuchter Atmosphäre (relative Feuchte etwa 40 %) gelagert. Damit ist sichergestellt, dass ausreichend Wasser in den aktiven Schichten des Mehrfachschichtsystems 4 eingelagert ist, um die vorgenannten für die Elektrochromie genutzten Prozesse zu ermöglichen.

Aufgrund der Reversibilität der genannten Vorgänge ist das Mehrfachschichtsystem 4 besonders für eine gekapselte Ausführung, bei der eine Nachspeisung von Arbeitsmedium oder anderem Medium vorgesehen ist, geeignet. Das elektrochrome Element 1 ist dementsprechend derart gekapselt ausgeführt, wobei die Reflektorschicht 12 zunächst mit einer Kleber- oder Haftvermittlerschicht 18 und anschließend mit einer geeigneten Versiegelung 20 bedeckt ist.

## Patentansprüche

1. Elektrochromes Element (1) mit einem transparenten Träger (2), auf den ein Mehrschichtsystem aufgebracht ist, wobei das Mehrschichtsystem eine lonenspeicherschicht (6), eine transparente Festkörperelektrolytschicht (10), eine elektrochrome Elektrodenschicht (6) und eine Reflektorschicht (12) umfasst, **dadurch gekennzeichnet, dass** die Reflektorschicht (12) eine für den Durchtritt von Wasser oder Wasserdampf ausreichende Porosität aufweist.

2. Elektrochromes Element nach Anspruch 1, **dadurch gekennzeichnet, dass** die Reflektorschicht eine Porosität von mindestens 10 %, vorzugsweise von mindestens 20 %, und/oder von höchstens 50 %, vorzugsweise von höchstens 35 %, aufweist.

3. Elektrochromes Element nach Anspruch 1 oder 2, **dadurch gekennzeichnet, dass** die Reflektorschicht aus Aluminium (Al) gebildet ist.

4. Elektrochromes Element nach einem der Ansprüche 1 bis 3, **dadurch gekennzeichnet, dass** die Reflektorschicht aus Kristalliten einer mittleren Größe von etwa 30 nm gebildet ist.

5. Elektrochromes Element nach einem der Ansprüche 1 bis 4, **dadurch gekennzeichnet, dass** die elektrochrome Elektrodenschicht aus Molybdänoxid, Titanoxid, Vanadiumoxid, Nioboxid, Chromoxid, Manganoxid, Eisenoxid, Cobaltoxid, Nickeloxid, Rhodiumoxid, Tantaloxid, Iridiumoxid und/oder vorzugsweise aus Wolframoxid gebildet ist.

6. Elektrochromes Element nach einem der Ansprüche 1 bis 5, **dadurch gekennzeichnet, dass** die Festkörperelektrolytschicht aus Zirkonoxid, Siliziumoxid, Aluminiumoxid, Selenoxid und/oder vorzugsweise aus Tantaloxid gebildet ist.

7. Elektrochromes Element nach einem der Ansprüche 1 bis 6, **dadurch gekennzeichnet, dass** die lonenspeicherschicht als elektrochrome Gegenelektrode ausgebildet ist.

8. Elektrochromes Element nach Anspruch 7, **dadurch gekennzeichnet, dass** die lonenspeicherschicht aus Iridiumoxid, Iridium-Magnesium-Oxid, Nickeloxid, Nickel-Magnesium-Oxid, Manganoxid, Cobaltoxid, Titan-Vanadium-Oxid und/oder vorzugsweise aus Iridium-Tantal-Oxid gebildet ist.

9. Elektrochromes Element nach einem der Ansprüche 1 bis 8, **dadurch gekennzeichnet, dass** die Reflektorschicht eine Schichtdicke von 50 bis 200nm, vorzugsweise von 60 bis 100 nm, besonders vorteilhafterweise von etwa 80 nm, aufweist.

10. Elektrochromes Element nach einem der Ansprüche 1 bis 9, **dadurch gekennzeichnet, dass** die lonenspeicherschicht eine Schichtdicke von etwa 100 nm und/oder die Festkörperelektrolytschicht eine Schichtdicke von etwa 200 nm und/oder die elektrochrome Elektrodenschicht eine Schichtdicke von etwa 270 nm aufweist.

11. Elektrochromes Element nach einem der Ansprüche 1 bis 10, **dadurch gekennzeichnet, dass** das Mehrschichtsystem mit einer Versiegelung versehen ist.

12. Elektrochromes Element nach einem der Ansprüche 1 bis 11, **dadurch gekennzeichnet, dass** die elektrochrome Elektrodenschicht auf der vom Träger abgewandten Seite der Festkörperelektrolytschicht aufgebracht und ihrerseits von der Reflektorschicht bedeckt ist.

13. Elektrochromes Element nach einem der Ansprüche 1 bis 12, **dadurch gekennzeichnet, dass** der lonenspeicherschicht eine weitere Elektrodenschicht, vorzugsweise gebildet aus Indium-Zinnoxid (ITO) oder Sb-dotiertem Zinnoxid (SnO₂ : Sb) oder Al-dotiertem Zinkoxid (ZnO : Al), unmittelbar benachbart ist.

14. Kraftfahrzeugspiegel, der ein elektrochromes Element nach einem der Ansprüche 1 bis 13 aufweist.

15. Verfahren zur Herstellung eines elektrochromen Elements nach einem der Ansprüche 1 bis 13, bei dem die lonenspeicherschicht, die Festkörperelektrolytschicht, die elektrochrome Elektrodenschicht und die Reflektorschicht durch ein Vakuumbeschichtungsverfahren, vorzugsweise durch Kathodenzerstäubung, auf den Träger aufgebracht werden.

16. Verfahren nach Anspruch 15, bei dem die Abscheidung der Reflektorschicht in Inertgasatmosphäre bei einem Systemdruck von etwa 0,01 bis 0,02 mbar vorgenommen wird.

17. Verfahren nach Anspruch 15 oder 16, bei dem die Reflektorschicht ohne zwischenzeitliches Belüften unmittelbar nach dem Aufbringen der elektrochromen Elektrodenschicht aufgebracht wird.

18. Verfahren nach einem der Ansprüche 15 bis 17, bei dem nach dem Aufbringen des Mehrschichtsystems auf den Träger eine Beladung von lonenspeicherschicht und/oder Festkörperelektrolytschicht und/oder elektrochromer Elektrodenschicht mit Wasser vorgenommen wird und anschließend eine Versiegelung aufgebracht wird.
